# EUROPEAN PATENT SPECIFICATION

(11) **EP 2 672 459 B1**
(45) Date of publication and mention of the grant of the patent: **21.03.2018**
(21) Application number: 13170813.3
(22) Date of filing: 06.06.2013
(51) Int. Cl.: G06T 19/00

(54) **Apparatus and method for providing augmented reality information using three dimension map**
Vorrichtung und Verfahren zur Bereitstellung von erweiterter Realitätsinformation unter Verwendung einer dreidimensionalen Karte
Appareil et procédé permettant de fournir des informations de réalité augmentée à l'aide de carte tridimensionnelle

(30) Priority: 06.06.2012 US 201261656134 P; 15.03.2013 KR 20130027752
(43) Date of publication of application: 11.12.2013
(73) Proprietor: Samsung Electronics Co., Ltd., Gyeonggi-do 443-742 (KR)
(72) Inventor: Jung, Jin-He, 443-742 Gyeonggi-do (KR); Lee, Gong-Wook, 443-742 Gyeonggi-do (KR); Baek, Sung-Hwan, 443-742 Gyeonggi-do (KR); Shin, Dae-Kyu, 443-742 Gyeonggi-do (KR); Lee, Jun-Ho, 443-742 Gyeonggi-do (KR); Cho, Ik-Hwan, 443-742 Gyeonggi-do (KR)
(74) Representative: HGF Limited

(56) References cited:
- AVERY, B. ET AL: "Visualizing Occluded Physical Objects in Unfamiliar Outdoor Augmented Reality Environments", ACM, 2 PENN PLAZA, SUITE 701 - NEW YORK USA, 2007, XP040467898,
- HUAMIN QU ET AL: "Focus+Context Route Zooming and Information Overlay in 3D Urban Environments", IEEE TRANSACTIONS ON VISUALIZATION AND COMPUTER GRAPHICS, IEEE SERVICE CENTER, LOS ALAMITOS, CA, US, vol. 15, no. 6, 1 November 2009 (2009-11-01), pages 1547-1554, XP011323749, ISSN: 1077-2626, DOI: 10.1109/TVCG.2009.144
- TSUDA, TAKAHIRO ET AL.: "Visualization Methods for Outdoor See-Through Vision", ACM, 2 PENN PLAZA, SUITE 701 - NEW YORK USA, 2005, pages 62-69, XP040046344,

## Description

### BACKGROUND OF THE INVENTION

### Field of the Invention

The present invention relates generally to an apparatus and method for providing an Augmented Reality (AR) using a camera. More particularly, the present invention relates to a method and apparatus for providing augmented information using a three Dimensional (3-D) map.

### Description of the Related Art

The various services and additional functions provided by a mobile device are gradually increasing, and among them, a camera function is considered an essential function. In order to enhance the effective value of a mobile device, and to satisfy various desires of users, applications for combining a mobile device having a camera with various additional services and functions of the mobile device are required. An example of such an application is a method of showing various information items for an object in a camera image to a user. For this purpose, an augmented reality technology may be applied.
In general, augmented reality means to combine a virtual object that the user desires to represent with the real world as a background. That is, the augmented reality is meant to represent a virtual object as a thing existing in areal environment by combining the virtual object and the real environment. Real time image recognition technology is increasingly being used in this context since a virtual object should be augmented at a correct location, and without error, even if the user's camera location or the user's pose changes, or if a real object where the virtual object will be shown is moved.
Existing augmented reality services are provided on the basis that a camera image while being photographed and previously stored database images, are compared with each other to show augmented information such that an extracted image is augmented and shown on the camera image. However, since the existing augmented reality service as described above uses a real time image acquired through a camera, it is restricted by the Field Of View (FOV) of the camera. For example, when a user of a mobile device having the camera is walking down a street where a number of buildings are located, the camera can photograph one or more buildings foremost among the buildings in the direction opposed to the lens of the camera, but cannot photograph other buildings or roads obstructed by the foremost buildings. Accordingly, there is a problem in that information for the other buildings or roads positioned behind the foremost buildings is unavailable, and hence the augmented information for them cannot be provided to the user.
Therefore, a need exists for a method and apparatus for providing a greater amount of augmented information using a 3-D map.
The above information is presented as background information only to assist with an understanding of the present disclosure. No determination has been made, and no assertion is made, as to whether any of the above might be applicable as prior art with regard to the present invention.
Avery, B. et al: "Visualizing Occluded Physical Objects in Unfamiliar Outdoor Augmented Reality Environments" describes techniques to allow both the visualization of hidden objects and the removal of real objects. Image-based rendering techniques are used to render corrected images on a model constructed on a display by a user.
Huamin Qu et al: "Focus + Context Route Zooming and Information Overlay in 3D Urban Environments" (IEEE Transactions on Visualization and Computer Graphics, Vol. 15, No. 6, 01-11-2009, pages1547-1554) describes a focus + context zooming technique to allow users to zoom into a route and its associated landmarks in a 3D urban environment for a 45-degree bird's-eye view. Empty space is created in a 2D map around the route, and landmarks are enlarged using a grid-based zooming technique.
Tsuda, Takehiro et al.: "Visualization Methods for Outdoor See-Through Vision", ACM, 2 Penn Plaza, Suite 701 - New York USA, 2005, pages 62-69, XP040046344 provides an evaluation of five visualization method for see-through vision that help a user to intuitively recognize occluded objects in outdoor scenes.

### SUMMARY OF THE INVENTION

Aspects of the present invention are to address at least the above-mentioned problems and/or disadvantages and to provide at least the advantages described below. Accordingly, an aspect of the present invention is to provide an apparatus and method capable of providing various pieces of information for objects included in a current image that is acquired through a camera using a three-Dimensional 3-D map.
Another aspect of the present invention is to provide an apparatus and method capable of providing augmented information for objects included in a current image acquired through a camera using a 3D map.
At least one of the above mentioned aspects may be achieved by the configuration elements as set forth below.
According to an aspect of the present invention, an apparatus according to claim 1 of providing augmented information using a 3-D map in a mobile device is provided. According to another aspect of the present invention, a method according to claim 8 of providing augmented information using a 3-D map in a mobile device is provided.
According to another aspect of the present invention, it is also possible to clearly indicate a driving route of a vehicle in a current image acquired through a camera using a 3-D map.
According to another aspect of the present invention, even if an object of the user's interest in a current image acquired through a camera is obstructed by one or more other objects, it is possible to provide augmented information of the interest object using a 3-D image.
Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of the present invention will be more apparent from the following detailed description taken in conjunction with the accompanying drawings, in which:
FIG. 1 is a schematic block diagram illustrating a mobile device according to an exemplary embodiment of the present invention;
FIG. 2 is a perspective view illustrating a mobile device according to an exemplary embodiment of the present invention;
FIG. 3 is a block diagram illustrating a configuration of an actual three-Dimensional (3-D) map providing unit according to an exemplary embodiment of the present invention;
FIG. 4 is a schematic flowchart for describing an augmented information providing method using a 3-D map according to an exemplary embodiment of the present invention;
FIGS. 5A to 5C are schematic views for describing a method for providing augmented information using a 3-D map according to an exemplary embodiment of the present invention; and
FIGS. 6A to 6C are schematic views for describing a method for providing augmented information using a 3-D map according to an exemplary embodiment of the present invention.

Throughout the drawings, it should be noted that like reference numbers are used to depict the same or similar elements, features, and structures.

### DETAILED DESCRIPTION OF THE EXEMPLARY EMBODIMENTS

The following description with reference to the accompanying drawings is provided to assist in a comprehensive understanding of exemplary embodiments of the present invention as described by the claims. It includes various specific details to assist in that understanding but these are to be regarded as merely exemplary. Accordingly, those of ordinary skill in the art will recognize that various changes and modifications of the embodiments described herein can be made without departing from the scope of the invention as defined by the appended claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

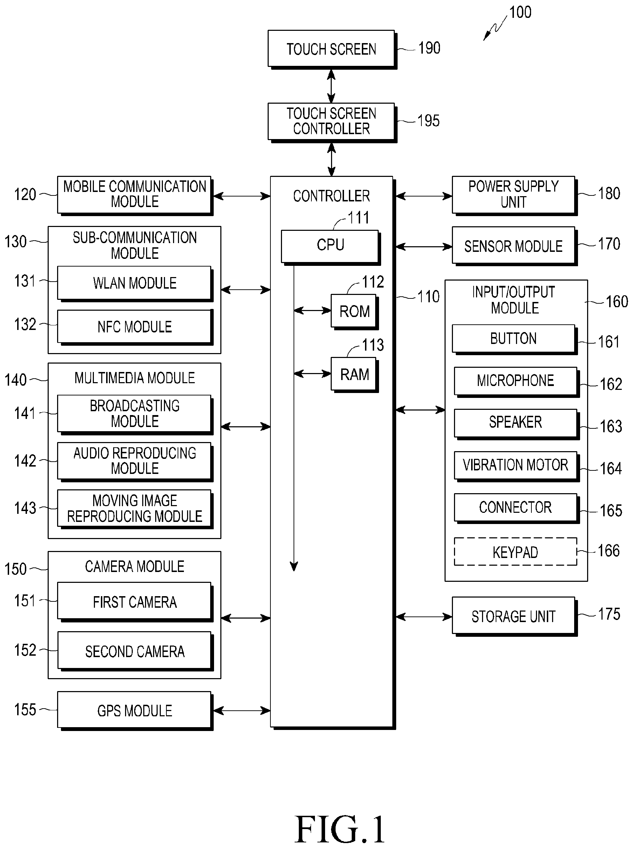

FIG. 1 is a schematic block diagram illustrating a mobile device according to an exemplary embodiment of the present invention.

Referring to FIG. 1, the apparatus 100 may be connected to an external device (not illustrated) using a mobile communication module 120, a sub-communication module 130, and a connector 165. The external device may include another device (not illustrated), for example, a portable phone (not illustrated), a smart phone (not illustrated), a tablet PC (not illustrated), or a server (not illustrated).

Referring to FIG. 1, the apparatus 100 includes a touch screen 190 and a touch screen controller 195. Further, the apparatus 100 includes a controller 110, a mobile communication module 120, a sub-communication module 130, a multimedia module 140, a camera module 150, a Global Positioning System (GPS) module 155, an input/output module 160, a sensor module 170, a storage unit 175, and a power supply unit 180. The sub-communication module 130 includes at least one of a Wireless Local Area Network (WLAN or wireless LAN) module 131 and a Near Field Communication (NFC) module 132, and the multimedia module 140 includes at least one of a broadcasting module 141, an audio reproducing module 142, and a moving image reproducing module 143. The camera module 150 includes at least one of a first camera 151 and a second camera 152. The input/output module 160 includes a button 161, a microphone 162, a speaker 163, a vibration motor 164, a connector 165, and a keypad 166.

The controller 110 may include a CPU 111, a Read Only Memory (ROM) 112 in which one or more control programs for controlling the apparatus 100 are stored, and a Random Access Memory (RAM) 113 which stores a signal or data output from the outside of the apparatus 100 or is used as a memory region for operations performed in the apparatus 100. The CPU 111 may include a single core, a dual core, a triple core or a quad core. The CPU 111, ROM 112 and RAM 113 may be connected with each other through internal buses.

The controller 110 may control the mobile communication module 120, the sub-communication module 130, the multimedia module 140, the camera module 150, the GPS module 155, the input/output module 160, the sensor module 170, the storage unit 175, the power supply unit 180, the touch screen 190, and the touch screen controller 195.

The mobile communication module 120 causes the apparatus 100 to be connected with another external device through mobile communication using one or more antennas (not illustrated) according to the control of the controller 110. The mobile communication module 120 transmits/receives wireless signals for voice communication, image communication, a Short Message Service (SMS), or a Multimedia Message Service (MMS) with a portable phone (not illustrated) that has a telephone number input to the apparatus 100, a smart phone (not illustrated), a tablet PC, or another device (not illustrated).

The sub-communication module 130 may include at least one of a WLAN module 131 and an NFC module 132. For example, the sub-communication module 130 may include only the WLAN module 131, only the NFC module 132, or both the WLAN module 131 and the NFC module 132.

The WLAN module 131 may be connected to the Internet at a place where a wireless Access Point (AP) (not illustrated) is available according to the control of the controller 110. The WLAN module 131 uses the wireless LAN standard (IEEE802.11x) of the Institute of Electrical and Electronics Engineers. The NFC module 132 may perform short range communication between the apparatus 100 and an image forming apparatus (not illustrated) according to the control of the controller 110. In exemplary embodiments, short range communication, Bluetooth communication, infra-red communication (Infra-red Data Association, or "IrDA"), or the like, may be included.

The apparatus 100 may include at least one of the mobile communication module 120, the WLAN module 131, and the NFC module 132 according to the performance thereof. For example, the apparatus 100 may include a combination of the mobile communication module 120, the WLAN module 131, and the NFC module 132 according to the performance thereof.

The multimedia module 140 may include the broadcasting communication module 141, the audio reproducing module 142, or the moving image reproducing module 143. The broadcasting communication module 141 may receive a broadcasting signal (for example, a TV broadcasting signal, a radio broadcasting signal or a data broadcasting signal) delivered from a broadcasting station and broadcast addition information (for example, Electric Program Guide (EPG) or Electric Service Guide (ESG) information) through a broadcasting communication antenna (not illustrated) according to the control of the controller 110. The audio reproducing module 142 may reproduce a digital audio file stored or received according to the control of the controller 110 (for example, having a file extension of .mp3, .wma, .ogg or .wav). The moving image reproducing module 143 may reproduce a digital moving image file stored or received according to the control of the controller 110 (for example, having a file extension of .mpeg, .mpg, .mp4, .avi, .mov, or .mkv). The moving image reproducing module 143 may also reproduce a digital audio file.

The multimedia module 140 may include the audio reproducing module 142 and the moving image reproducing module 143, but not the broadcasting communication module 141. In addition, the audio reproducing module 142 or the moving image reproducing module 143 of the multimedia module 140 may be included in the controller 110.

The camera module 150 may include at least one of the first camera 151 and the second camera 152 that photograph a still image or a moving image according to the control of the controller 110. In addition, the first camera 151 or the second camera 152 may include an auxiliary light source, for example, a flash (not illustrated) that provides a quantity of light required for photographing. The first camera 151 may be disposed on the front surface of the apparatus 100, and the second camera 152 may be disposed on the rear surface of the apparatus 100. Alternatively, the first camera 151 and the second camera 152 may be arranged adjacent to each other (for example, having an interval between the first camera 151 and the second camera 152 in a range of from 1 cm to 8 cm) to photograph a three-Dimensional (3-D) still image or a 3-D moving image.

The GPS module 155 may receive electric waves from a plurality of GPS satellites on an earth orbit (not illustrated), and may calculate the location of the apparatus using the time of arrival of the electric waves from the GPS satellites (not illustrated) to the apparatus 100.

The input/output module 160 may include at least one of the buttons 161, the microphone 162, the speaker 163, the vibration motor 164, the connector 165, and the keypad 166.

The buttons 161 may be formed on the front surface, a side surface, or the rear surface of the apparatus 100, and may include at least one of a power/locking button (not illustrated), a volume button (not illustrated), a menu button, a home button, a back button, and a search button 161.

The microphone 162 receives a voice or sound input and converts the input into an electrical signal according to the control of the controller 110.

The speaker 163 may output the sounds corresponding to various signals of the mobile communication module 120, the sub-communication module 130, the multimedia module 140, or the camera module 150 (for example, sounds that correspond to a wireless signal, a broadcasting signal, a digital audio file, a digital moving image file, a photograph, or the like) to the outside of the apparatus 100 according to the control of the controller 110. The speaker 163 may output sounds corresponding to the functions performed by the apparatus 100 (for example, corresponding to a button operating sound or to a communication connection sound corresponding to a telephone communication). One or a plurality of speakers 163 may be formed at a proper position or positions on the housing of the apparatus 100.

The vibration motor 164 may convert an electrical signal into mechanical vibration according to the control of the controller 110. For example, when the apparatus 100 in the vibration mode receives a voice communication from another device (not illustrated), the vibration motor 164 is operated. One or a plurality of vibration motors 164 may be provided in the housing of the apparatus 100. The vibration motor 164 may be operated in response to a user's touch action that touches the touch screen 190 or a continuous touch movement on the touch screen 190.

The connector 165 may be used as an interface for connecting the apparatus 100 with an external device (not illustrated) or to a power source (not illustrated). According to the control of the controller 110, the data stored in the storage unit 175 of the apparatus 100 may be transmitted to an external device (not illustrated), or data may be received from an external device (not illustrated), through a wire cable connected to the connector 165. Power may be input from the power source (not illustrated) or may charge a battery (not illustrated) through a wire cable connected to the connector 165.

The keypad 166 may receive a key input from the user for controlling the apparatus 100. The keypad 166 may take the form of a physical keypad (not illustrated) formed on the apparatus 100 or a virtual keypad (not illustrated) displayed on the touch screen 190. The physical keypad (not illustrated) formed on the apparatus 100 may be omitted according to the performance or configuration of the apparatus 100.

The sensor module 170 includes at least one sensor that detects the condition of the apparatus 100. In exemplary embodiments, the sensor module 170 may include a proximity sensor that detects whether or not the user approaches the apparatus 100, an illumination sensor (not illustrated) that detects the quantity of light around the apparatus 100, or a motion sensor (not illustrated) that detects the action of the apparatus 100 (for example, the rotation of the apparatus 100, its acceleration velocity or whether a vibration is applied to the apparatus 100). At least one of the sensors may detect the condition and produce and transmit a signal corresponding to the detection to the controller 110. The sensors of the sensor module 170 may be added or omitted according to the performance of the apparatus 100.

The storage unit 175 may store signals or data input/output to correspond to operations of the mobile communication module 120, the sub-communication module 130, the multimedia module 140, the camera module 150, the GPS module 155, the input/output module 160, the sensor module 170, and the touch screen 190 according to the control of the controller 110. The storage unit 175 may also store control programs and applications for controlling the apparatus 100 or the controller 110.

The term "storage unit" may include the storage unit 175, the ROM 112 and the RAM 113 in the controller 110, or a memory card (not illustrated)(for example, an SD card and a memory stick) installed in the apparatus 100. The storage unit 175 may include a non-volatile memory, a volatile memory, a Hard Disc Drive (HDD) or a Solid State Drive (SSD).

The power supply unit 180 may supply power to one or more batteries (not illustrated) disposed in the housing of the apparatus 100 according to the control of the controller 110. The one or more batteries (not illustrated) supply power to the apparatus 100.

Also, the power supply unit 180 may supply power input from an external power source (not illustrated) through a wire cable connected to the connector 165 of the apparatus 100.

The touch screen 190 may provide user interfaces which correspond to various services (for example, a telephone conversation, a data transmission, a broadcast, and to photography), respectively, to the user. The touch screen 190 may transmit an analog signal input to a user interface and corresponding to at least one touch to the touch screen controller 195. The touch screen 190 may receive an input of at least one touch through the user's body (for example, through fingers, including a thumb) or through a touchable input means (for example, a stylus pen). Also, the touch screen 190 may receive an input of continuous movement of one touch in the at least one touch. The touch screen 190 may transmit an analog signal corresponding to the continuous movement of the touch to the touch screen controller 195.

In exemplary embodiments of the present invention, the touch is not limited to the touch between the touch screen 190 and the user's body or to the touchable input means, and may include a contactless touch (for example, when a detectable space between the touch screen 190 and the user's body or the touchable input means is not more than 1 mm). The space detectable by the touch screen 190 may be changed according to the performance or configuration of the apparatus 100.

The touch screen 190 may be implemented in, for example, a resistive type, a capacitive type, an infrared type, or an acoustic wave type.

The touch screen controller 195 converts an analog signal received from the touch screen 190 into a digital signal (for example, having X and Y coordinates), and transmits the digital signal to the controller 110. The controller 110 may control the touch screen 190 using the digital signal received from the touch screen controller 195. For example, the controller 110 may cause a shortcut icon (not illustrated) displayed on the touch screen 190 to be selected or may execute the shortcut icon (not illustrated). In addition, touch screen controller 195 may be included in the controller 110.

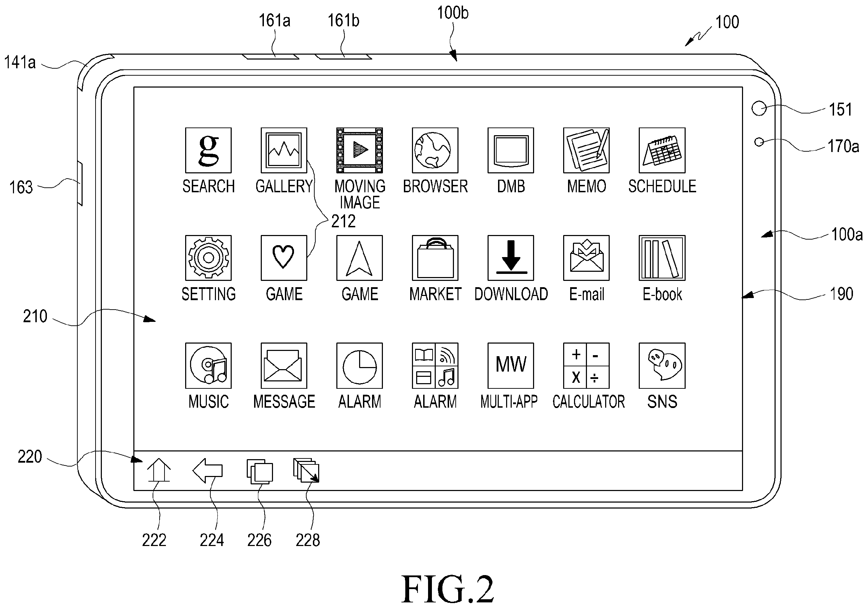

FIG. 2 is a perspective view of a mobile device according to an exemplary embodiment of the present invention.

Referring to FIG. 2, a touch screen 190 is disposed at the center of the front surface 100a of the apparatus 100. The touch screen 190 is formed in a large size to occupy the greater part of the front surface 100a of the apparatus 100. At a marginal area of the front surface 100a of the apparatus 100, a first camera 151 and an illumination sensor 170a may be disposed. On a side surface 100b of the apparatus 100, for example, a power/reset button 160a, a volume button 161b, a speaker 163, a terrestrial DMB antenna 141a for receiving a broadcast signal, a microphone (not illustrated), and a connector (not illustrated) may be disposed. On the rear surface (not illustrated) of the apparatus 100, a second camera (not illustrated) may be disposed.

The touch screen 190 includes a main screen 210 and a bottom bar 220.

The main screen 210 is a region where one or more applications are executed. FIG. 2 illustrates an example in which a home screen is displayed on the touch screen 190.

The home screen may be the first screen displayed on the touch screen 190 when the apparatus 100 is turned on. On the home screen, a plurality of execution keys 212 for executing a plurality of applications stored in the apparatus 100 may be displayed in a row and/or in a column arrangement. The execution keys 212 may be formed with, for example, icons, buttons, texts, and the like. When each of the execution keys 212 are touched, an application corresponding to a touched execution key 212 may be executed and displayed on the main screen 210.

The bottom bar 220 extends horizontally at the lower end of the touch screen 190, and may include a plurality of standard function buttons 222 to 228.

In addition, at the top end of the touch screen 190, a top end bar (not illustrated) may be formed that displays the states of the apparatus 100, for example, the state of charge of the battery, the intensity of a received signal, and the current time.

Meanwhile, according to an Operating System (OS) of the apparatus 100, or to an application executed in the apparatus 100, the bottom bar 220 and the top end bar (not illustrated) may not be displayed on the touch screen 190. If both the bottom bar 220 and the top end bar (not illustrated) are not displayed on the touch screen 190, the main screen 210 may be formed on the entire area of the touch screen 190. In addition, the bottom bar 220 and the top end bar (not illustrated) may be displayed translucently to be superimposed on the main screen 210.

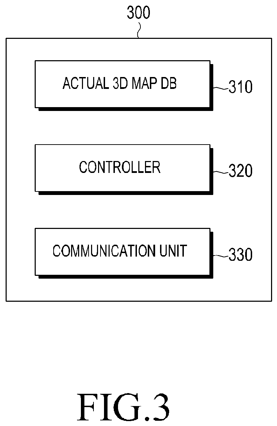

FIG. 3 is a block diagram of an actual 3-D map providing unit according to an exemplary embodiment of the present invention.

Referring to FIG. 3, the 3-D map providing unit 300 includes a map database (DB) 310, a controller 320, and a communication unit 330.

In exemplary embodiments, the map DB 310 stores actual 3-D maps consisting of actual images of cities or streets photographed by a camera. Here, the actual 3-D map means a 3-D map implemented by photographing a real street using a vehicle, an airplane, or the like, and then using the photographed actual image. Such an actual 3-D map is obtained by photographing a city or a street using a stereo camera mounted on a vehicle, or the like. Therefore, it is possible to obtain not only three dimension coordinates (x, y and z coordinates) of objects included in the photographed image, but also depth information corresponding to the distance between the camera used in the photographing and the objects. In addition, such a 3-D map may be implemented by a plurality of two-Dimensional (2-D) images for a wide area using an airplane, extracting depth information at an overlapping area between each two neighboring 2-D images among the photographed images, and performing three dimension modeling through three dimension mapping. In addition, each of the objects included in the actual 3-D map has a plurality of pieces of 3-D information and depth information items. For example, a plurality of pixels displaying each object may have 3-D information and depth information items. As a result, the actual 3-D map may differentiate not only a position of a specific building, but also the contour of the building, e.g., the front, the rear and the side views of the specific building, and may also differentiate respective floors of the building. On the contrary, existing 2-D maps are different from the above-described 3-D map in that, since only GPS information is used from the 2-D map, only a single location information item may be provided for a specific building and thus the front and rear sides, or respective floors, of the building cannot be differentiated in detail.

The controller 320 receives a request for the stored 3-D images and augmented information from a mobile device 100 through the communication unit 330, and provides the 3-D images and augmented information to the mobile device 100 in response to the request. The 3-D images and augmented information provided to the mobile device 100 by the controller 320 will be described in detail below.

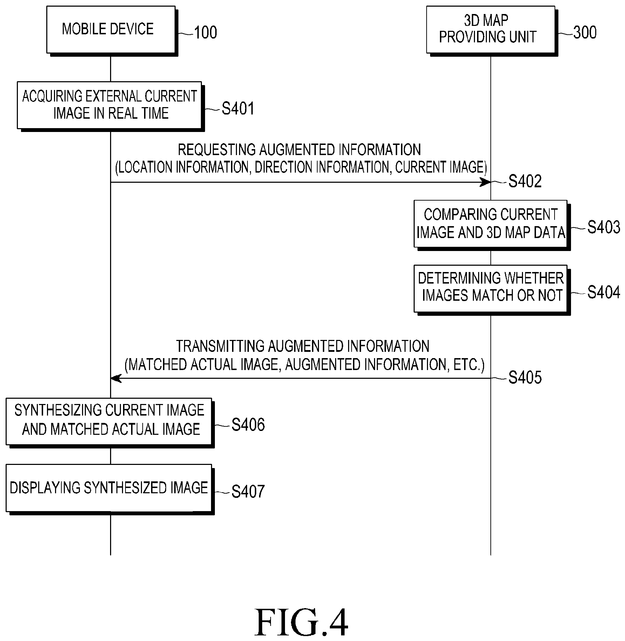

FIG. 4 is a schematic flowchart for describing a method for providing augmented information using a 3-D map according to an exemplary embodiment of the present invention.

Referring to FIG. 4, the controller of the mobile device 100 acquires an external current image using the camera 150 in step S401. The external current image may be acquired in real time, and the acquired external current image may be displayed on the display 190. A plurality of objects may be included in the external current image. For example, various objects such as buildings, streets, vehicles and pedestrians may be included in the external current image. However, due to restrictions, for example, the position of the mobile device 100 held by the user, the height of a vehicle upon which the mobile device 100 is mounted, and the Field Of Vision (FOV) of the camera 150, a first object may be obstructed by at least one second object among the plurality of objects in the external image.

The controller 110 of the mobile device 100 requests augmented information for the first object from the 3-D map providing unit 300 in step S402. In step S402, the mobile device 100 transmits the GPS information (location information) acquired by the GPS module 155, the camera 150 aiming direction information acquired by the sensor module 170, and the external current image acquired by the camera 150 to the 3-D map providing unit 300. The augmented information may include a previously photographed 3-D image for the first object. The augmented information may further include various information items for a Point Of Interest (POI), for example, vehicle navigation information, buildings' names, information regarding any specific stores positioned inside of the buildings, advertisement information, and the like.

The 3-D map providing unit 300 compares the GPS information received from the mobile device 100, the camera 150 aiming direction information acquired by the sensor module 170, and the external current image with a previously stored actual 3-D image in step S403 to acquire a previously stored 3-D image that matches the first object in step S404.

The 3-D map providing unit 300 transmits the acquired previously stored 3-D image matched to the first object to the mobile device 100 in step S405. Also, the 3-D map providing unit 300 may additionally transmit predetermined augmented information as well as the acquired previously stored 3-D image to the mobile device 100.

The controller 110 of the mobile device 100 synthesizes the external current image and the matched actual image in step S406. The controller 110 of the mobile device 100 executes a control so that the display 190 displays a synthesized image in which the external current image acquired by the camera 150 and a previously stored 3-D image which corresponds to at least a part of the first object and thus, received from the 3-D map providing unit 300 is synthesized with each other in step S407. For this purpose, the controller 110 may produce a synthesized image in which the external current image acquired by the camera 150 and a previously stored 3-D image which corresponds to at least a part of the first object and thus, received from the 3-D map providing unit 300 is synthesized with each other, and displays the synthesized image on the display 190. In addition, the synthesized image may be produced in the 3-D map providing unit 300 and provided to the mobile device 100. The 3-D map providing unit 300 may be configured by a server positioned remotely from the mobile device 100, or formed inside of the mobile device 100.

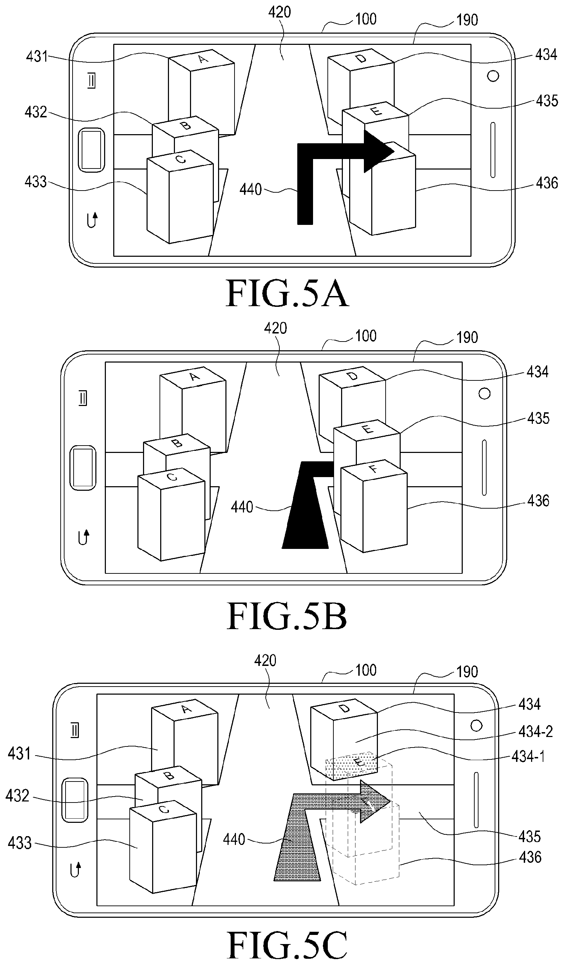

FIGS. 5A to 5C are schematic views for describing a method for providing augmented information using a 3-D map according to an exemplary embodiment of the present invention.

FIG. 5A illustrates an example of indicating a driving direction in a navigation system using a 2-D map. Referring to FIG. 5A, a 2-D map is displayed on the display 190 of the mobile device 100, and a plurality of buildings 431 to 436 are positioned around the junction of the roads 420. The 2-D map may be implemented by a computer graphic.

When it is desired to guide a user carrying the mobile device 100, or a vehicle mounted with the mobile device 100, to drive to the right from the junction of the roads 420, an arrow 440 indicating the driving direction is indicated such that it floats above the building E 435 and the building F 436 rather than being correctly indicated on the roads 420 positioned between the building D 434 and the building E 435. This is because only the GPS locations of the building D 434 and building E 435 can be grasped, and the three dimension contours of the building D 434 and the building E 435 cannot be correctly recognized from the 2-D map.

FIG. 5B illustrates an example of displaying a driving direction in a navigation system using an actual 3-D map. Referring to FIG. 5B, since the 3-D map displayed on the display 190 of the mobile device 100 includes the three dimension information and depth information of each object, the 3 dimension contours of the building D 434 and the building E 435 (for example, the front sides, the rear sides, the left sides, the right sides, and the respective heights of the buildings), can be correctly grasped, and thus, the arrow 440 indicating the driving direction can be displayed to be positioned on the roads 420 between the front side of the building D 434 and the rear side of the building E 435. In this case, since the actual 3-D map is used, the arrow 440 can be displayed as if it is drawn on the road 420 rather than being seen in a floating state. The 3-D map may be formed by an actual image photographed by the camera. However, in FIG. 5B, since a part of the arrow 440 is partially obstructed by the building E 435, the user may be in a difficult situation in recognizing the correct driving direction and the user's destination.

FIG. 5C illustrates an example of displaying a driving direction in a navigation system using an actual 3-D map according to an exemplary embodiment of the present invention. Referring to FIG. 5C, an external current image photographed in real time through the camera 150 is displayed on the display 190 of the mobile device 100. The external current image includes roads 420 and a plurality of buildings 431 to 436 positioned around the roads 420.

According to the present exemplary embodiment, the controller 110 of the mobile device 100 may adjust the transparency of the building E 435 and the building F 436 positioned in front of the building D 434 so that the entire appearance of the building D 434 may be displayed on the display 190. Here, it may be assumed that the building D 434 is a first object and the building E 435 and the building F 436 are second objects. For example, in FIG. 5C, the contours of the building E 435 and the building F 436 are indicated by dotted lines in order to represent the translucently displayed state of the building E 435 and the building F 436. Also, the controller 110 of the mobile device 100 may process the building E 435 and the building F 436 to be transparent so that the building E 435 and the building F 436 are not displayed on the display 190. In addition, an arrow 440 for guiding the driving direction for a user who holds the mobile device 100 or a vehicle which is mounted with the mobile device 100 is indicated on the roads 420 in front of the building D 434. As described above, according to the present invention, the arrow 440 indicating the driving direction may be displayed as if it is directly drawn on a road in an external current image acquired in real time by the camera 150. In addition, since the arrow 440 is not obstructed by the building E 435 and the building F 436, the user may recognize the correct driving direction and the user's destination through the arrow 440.

Meanwhile, in the external current image acquired in real time by the camera 150 of the mobile device 100, the building E 435 and the building F 436 obstruct a part or the entirety of the building D 434. However, when the building E 435 and the building F 436 are displayed transparently or translucently as described above, there is no information for a region 434-1 in the building D 434 which has been obstructed by the building E 435 and the building F 436. Therefore, the image is not smoothly displayed between the obstructed region 434-1 and a non-obstructed region 434-2. In order to address this problem, the exemplary embodiments herein may receive an image corresponding to the obstructed region 434-1 among previously photographed images for the building D 434 from the 3-D map providing unit 300 and may display the image on the obstructed region 434-1. As a result, in the obstructed region 434-1 of the building D 434, the previously photographed image received from 3-D map providing unit 300 is displayed, and for the non-obstructed region 434-2 of the building D 434, and for the other objects 420, 431, 432, 433 and 434, the images photographed in real time by the camera 150 are mixed and displayed. When there is a user's command through the input module 160 or when it is determined that at least a part of the arrow 440 is obstructed by other objects 435 and 436, the controller 110 may determine whether to display the building E 435 and the building F 436 transparently or translucently, or whether to synthesize the current image and a previously photographed image received from the 3-D map providing unit and display the synthesized image on the display 190 of the mobile device 100.

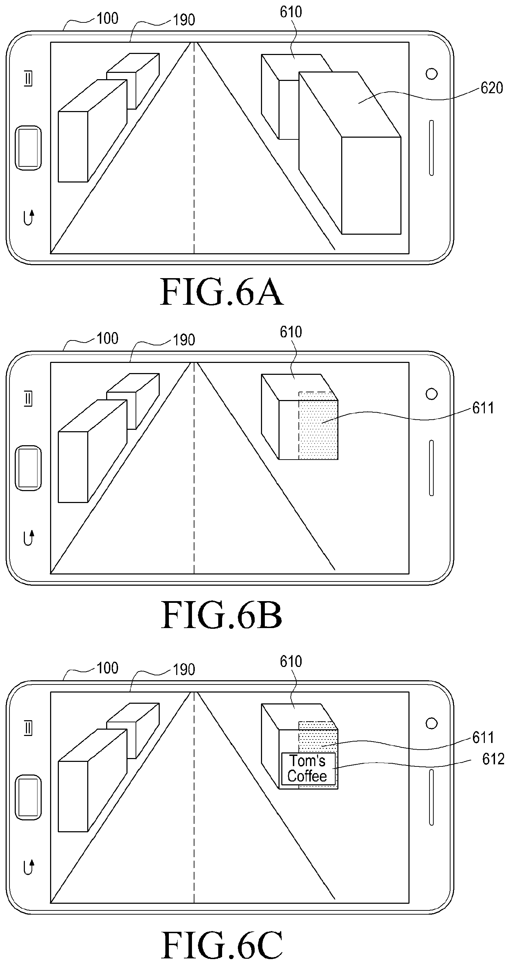

FIGS. 6A to 6C are schematic views for describing a method for providing augmented information using a 3-D map according to an exemplary embodiment of the present invention.

Referring to FIG. 6A, an external image photographed in real time through the camera 150 is displayed on the display 190 of the mobile device 100. The external current image includes a first object 610 and a second object 620. At this time, the camera 150 may be in a preview mode. In such a preview mode, when a user's command for removing the second object 620 is input, for example, when the second object 620 is tapped or flicked by the user, the controller 110 performs a control in such a manner that the second object 620 is adjusted to be transparent or translucent in response to the user's command so that the contour of the first object 610 which has been obstructed by the second object 620 can be entirely displayed. Alternatively, when the first object 610 is long-pressed on the touch screen 190 by the user, the controller 110 may determine that the first object 610 is selected and process the second object 620 positioned in front of the first object 610 to be transparent or translucent.

Referring to FIG. 6B, the controller 110 may cause a previously photographed image received from 3-D map providing unit 300 and the current image to be synthesized and displayed in such a manner that for the portion 611 obstructed by the second object 620 (not illustrated) in the first object 610, the previously photographed image received from 3-D map providing unit 300 as described above and for the other portions of the first object 610 except for the portion 611, the current image photographed in real time by the camera 150 is displayed. As a result, the user may see an entire synthesized image for a specific building or a specific object desired by the user among the images displayed in the preview mode of the camera 150, and the user may easily determine whether the first object 610 is the desired destination through the synthesized image.

Referring to FIG. 6C, building information, store information, advertisement information, or the like, may be displayed on a surface of the first object 610 which has been positioned behind the second object 620 (not illustrated) in a state where the second object 620 is processed to be transparent or to be translucent. In FIG. 6C, when augmented information 612, for example, "Tom's Coffee" is displayed on the external wall of the first floor of a building which is the first object 610, the user may confirm that the first floor of the first object 610 is the user's appointed place. The augmented information may be received from the 3-D map providing unit 300. Also, the augmented information displayed on the first object 600 may include information for the user's past and present concerns related to the first object 610, for example, the user's schedule information stored in the storage unit 175 of the mobile device 100 (for example, "Meeting with Alice at Tom's Coffee at 2 pm today"), Alice's photograph stored in the storage unit 175, and a message received from or transmitted to Alice (for example, "Definitely get me the requested document when we meet at 2 pm today!"). Due to this, there is an advantage in that the user may easily confirm the user's appointed place, the user's job to be done, etc.

It will be appreciated that the methods for providing augmented information using a 3-D map according to the exemplary embodiments of the present invention may be implemented in a form of hardware, software or a combination of the hardware and software. Such arbitrary software may be stored in a volatile or non-volatile storage device, for example a ROM, a memory, for example, a RAM, a memory chip, a memory device, or a memory integrated circuit, or a storage medium that is optically or magnetically recordable and readable by a machine (e.g., a computer), for example, a CD, a DVD, a magnetic disc, or a magnetic tape, irrespective of whether the software is erasable or rewritable or not. The inventive graphic screen renewal method may be implemented by a computer or a portable terminal that includes a controller and a memory, in which the memory is an example of a machine-readable storage medium which is suitable for storing a program or programs that contain instructions for implementing the exemplary embodiments of the present invention. Accordingly, the present invention includes a storage medium, a program that contains codes for implementing the apparatuses or methods defined in the accompanying claims, and a machine-readable (for example, computer-readable) storage medium that stores the program. In addition, the programs may be electronically transmitted through an arbitrary medium, for example, communication signals transmitted through a wired or wireless connection, and the present invention properly includes those equivalent thereto.

Further, the apparatus for providing augmented information using a 3-D map may receive and store the program from a wiredly or wirelessly connected program providing apparatus. The program providing apparatus may include a memory for storing a program that contains instructions for executing the augmented information providing methods using the 3-D map, a communication unit for performing a wired or wireless communication of the augmented information providing apparatus using the 3-D map, and a controller for transmitting the corresponding program to the communication unit in response to a request of the augmented information providing apparatus using the 3-D map or automatically.

While the present invention has been shown and described with reference to certain embodiments thereof, it will be understood by those skilled in the art that various changes in form and details may be made therein without departing from the scope of the present invention as defined by the appended claims.

## Claims

1. An apparatus for providing augmented information using a three-Dimensional, 3-D, map in a mobile device (100), the apparatus comprising:
a camera (150);
a display (190) arranged to display a current image including a first object (434) and at least one second object (435, 436) positioned in front of the first object (434) to obstruct at least a partial region (434-1) of the first object (434), wherein the current image is acquired in real time through the camera; and
a controller (110) arranged to:
acquire a previously stored actual 3-D image matched to the first object (434) and augmented information for the first object from the 3-D map; and produce a synthesised image in which the current image acquired (S401) by the camera in real time and said previously stored actual 3D image and the augmented information are mixed (S406) and displayed (S407) on the display, in such a manner that for the portion obstructed by the second object in the first object, the previously stored actual 3D image and for the other portions of the first object except for the obstructed portion, the current image photographed in real time by the camera is displayed.

2. The apparatus of claim 1, wherein the controller (110) is further arranged to display the actual 3-D image as being inserted into the partial region (434-1) in the current image.

3. The apparatus of claim 2, wherein the controller (110) is further arranged to display at least a part of the at least one second object (435, 436) transparently or translucently.

4. The apparatus of claim 1, wherein the controller (110) is further arranged to:
display the actual 3-D image as being inserted into the partial region (434-1) in the current image;
display at least a part of the at least one second object (435, 436) transparently or translucently; and
indicate a driving route of the mobile device (100) between the first object (434) and the at least one second object (435, 436).

5. The apparatus of claim 1, wherein the actual 3-D image includes 3-D information and depth information for pixels of each image.

6. The apparatus of claim 1, wherein the controller (110) is further arranged to:
transmit location information and direction information of the mobile device (100) to a 3-D map providing unit (300); and
transmit the current image to the 3-D map providing unit (300); and
wherein the actual 3-D image is matched based on the location information and direction information of the mobile device (100), and on the current image by the 3-D map providing unit (300).

7. The apparatus of claim 1, wherein the controller (110) is further arranged to display information stored in the mobile device on the first object (434).

8. A method of providing augmented information using a three-Dimensional, 3-D, map in a mobile device (100), the method comprising:
acquiring (S401) a current image including a first object (434) and at least one second object (435, 436) positioned in front of the first object (434) to obstruct at least a partial region (434-1) of the first object (434), wherein the current image is acquired in real time using a camera (150);
acquiring a previously stored actual 3-D image matched to the first object (434) and augmented information for the first object from the 3-D map; and
mixing (S406) and displaying (S407) the current image acquired in real time using the camera (150) with the actual 3-D image and the augmented information on a display (190) in such a manner that for the portion obstructed by the second object in the first object, the previously stored actual 3D image and for the other portions of the first object except for the obstructed portion, the current image photographed in real time by the camera is displayed.

9. The method of claim 8, wherein the actual 3-D image is displayed (S407) such that it is inserted into the partial region (434-1) in the current image.

10. The method of claim 9, wherein at least a part of the at least one second object (435, 436) is displayed transparently or translucently.

11. The method of claim 8, wherein the actual 3-D image is displayed as being inserted into the partial region (434-1) in the current image;
wherein at least a part of the at least one second object (435, 436) is displayed transparently or translucently; and
wherein a driving route of the mobile device (100) is indicated between the first object (434) and the at least one second object (435, 436).

12. The method of claim 8, wherein the actual 3-D image includes 3-D information and depth information for pixels of each image.

13. The method of claim 8, wherein the mobile device (100) transmits location information of the mobile device (100), direction information of the mobile device (100) and the current image to a 3-D map providing unit (300); and
wherein the actual 3-D image is matched based on the location information of the mobile device (100), the direction information of the mobile device (100) and on the current image by the 3-D map providing unit (300).

14. The method of claim 8, wherein the mobile device (100) displays information stored therein on the first object (434).

## Patentansprüche

1. Eine Vorrichtung zur Bereitstellung von erweiterten Informationen unter Verwendung einer dreidimensionalen (3D) Karte in einem mobilen Gerät (100), wobei die Vorrichtung Folgendes umfasst:
eine Kamera (150);
eine Anzeige (190), die eingerichtet ist, um ein aktuelles Bild einschließlich eines ersten Objekts (434) und mindestens eines zweiten Objekts (435, 436) anzuzeigen, das vor dem ersten Objekt (434) angeordnet ist, um zumindest einen Teilbereich (434-1) des ersten Objekts (434) zu verdecken, wobei das aktuelle Bild in Echtzeit mittels der Kamera erfasst wird; und
eine Steuereinheit (110), die für folgende Zwecke eingerichtet ist:
Abrufen eines zuvor gespeicherten realen 3D-Bilds, das mit dem ersten Objekt (434) abgeglichen wurde, und erweiterter Informationen für das erste Objekt aus der 3D-Karte; und
Erzeugen eines synthetisierten Bilds, in dem das mittels der Kamera in Echtzeit erfasste (S401) aktuelle Bild und das genannte zuvor gespeicherte reale 3D-Bild sowie die erweiterten Informationen gemischt (S406) und auf der Anzeige angezeigt (S407) werden, wobei dies derart erfolgt, dass für den Bereich, der im ersten Objekt durch das zweite Objekt verdeckt wird, das zuvor gespeicherte reale 3D-Bild und für die anderen Bereiche des ersten Objekts mit Ausnahme des verdeckten Bereichs das in Echtzeit mittels der Kamera aufgenommene aktuelle Bild angezeigt wird.

2. Die Vorrichtung nach Anspruch 1, wobei die Steuereinheit (110) weiter eingerichtet ist, um das reale 3D-Bild als eingefügt in den Teilbereich (434-1) in dem aktuellen Bild anzuzeigen.

3. Die Vorrichtung nach Anspruch 2, wobei die Steuereinheit (110) weiter eingerichtet ist, um zumindest einen Abschnitt des mindestens einen zweiten Objekts (435, 436) als durchsichtig oder durchscheinend anzuzeigen.

4. Die Vorrichtung nach Anspruch 1, wobei die Steuereinheit (110) weiter für folgende Zwecke eingerichtet ist:
Anzeigen des realen 3D-Bilds als eingefügt in den Teilbereich (434-1) in dem aktuellen Bild;
Anzeigen von zumindest einem Abschnitt des mindestens einen zweiten Objekts (435, 436) als durchsichtig oder durchscheinend; und
Angeben einer Fahrstrecke des mobilen Geräts (100) zwischen dem ersten Objekt (434) und dem mindestens einen zweiten Objekt (435, 436).

5. Die Vorrichtung nach Anspruch 1, wobei das reale 3D-Bild 3D-Informationen und Tiefeninformationen für Pixel eines jeden Bilds umfasst.

6. Die Vorrichtung nach Anspruch 1, wobei die Steuereinheit (110) weiter für folgende Zwecke eingerichtet ist:
Übermitteln von Positionsinformationen und Richtungsinformationen des mobilen Geräts (100) an eine 3D-Kartenbereitstellungseinheit (300); und
Übermitteln des aktuellen Bilds an die 3D-Kartenbereitstellungseinheit (300); und
wobei das reale 3D-Bild basierend auf den Positionsinformationen und Richtungsinformationen des mobilen Geräts (100) sowie auf dem aktuellen Bild durch die 3D-Kartenbereitstellungseinheit (300) abgeglichen wird.

7. Die Vorrichtung nach Anspruch 1, wobei die Steuereinheit (110) weiter eingerichtet ist, um in dem mobilen Gerät gespeicherte Informationen auf dem ersten Objekt (434) anzuzeigen.

8. Ein Verfahren zur Bereitstellung von erweiterten Informationen unter Verwendung einer dreidimensionalen (3D) Karte in einem mobilen Gerät (100), wobei das Verfahren Folgendes umfasst:
Erfassen (S401) eines aktuellen Bilds einschließlich eines ersten Objekts (434) und mindestens eines zweiten Objekts (435, 436), das vor dem ersten Objekt (434) angeordnet ist, um zumindest einen Teilbereich (434-1) des ersten Objekts (434) zu verdecken, wobei das aktuelle Bild in Echtzeit mittels einer Kamera (150) erfasst wird;
Abrufen eines zuvor gespeicherten realen 3D-Bilds, das mit dem ersten Objekt (434) abgeglichen wurde, und erweiterter Informationen für das erste Objekt aus der 3D-Karte; und
Mischen (S406) und Anzeigen (S407) des mittels der Kamera (150) in Echtzeit erfassten aktuellen Bilds mit dem realen 3D-Bild und den erweiterten Informationen auf einer Anzeige (190), wobei dies derart erfolgt, dass für den Bereich, der im ersten Objekt durch das zweite Objekt verdeckt wird, das zuvor gespeicherte reale 3D-Bild und für die anderen Bereiche des ersten Objekts mit Ausnahme des verdeckten Bereichs das in Echtzeit mittels der Kamera aufgenommene aktuelle Bild angezeigt wird.

9. Das Verfahren nach Anspruch 8, wobei das reale 3D-Bild als eingefügt in den Teilbereich (434-1) in dem aktuellen Bild angezeigt wird (S407).

10. Das Verfahren nach Anspruch 9, wobei zumindest ein Abschnitt des mindestens einen zweiten Objekts (435, 436) als durchsichtig oder durchscheinend angezeigt wird.

11. Das Verfahren nach Anspruch 8, wobei das reale 3D-Bild als eingefügt in den Teilbereich (434-1) in dem aktuellen Bild angezeigt wird;
wobei zumindest ein Abschnitt des mindestens einen zweiten Objekts (435, 436) als durchsichtig oder durchscheinend angezeigt wird; und
wobei eine Fahrstrecke des mobilen Geräts (100) zwischen dem ersten Objekt (434) und dem mindestens einen zweiten Objekt (435, 436) angegeben wird.

12. Das Verfahren nach Anspruch 8, wobei das reale 3D-Bild 3D-Informationen und Tiefeninformationen für Pixel eines jeden Bilds umfasst.

13. Das Verfahren nach Anspruch 8, wobei das mobile Gerät (100) Positionsinformationen des mobilen Geräts (100), Richtungsinformationen des mobilen Geräts (100) und das aktuelle Bild an eine 3D-Kartenbereitstellungseinheit (300) übermittelt; und
wobei das reale 3D-Bild basierend auf den Positionsinformationen des mobilen Geräts (100), den Richtungsinformationen des mobilen Geräts (100) und auf dem aktuellen Bild durch die 3D-Kartenbereitstellungseinheit (300) abgeglichen wird.

14. Das Verfahren nach Anspruch 8, wobei das mobile Gerät (100) darauf gespeicherte Informationen auf dem ersten Objekt (434) anzeigt.

## Revendications

1. Un appareil de fourniture d'informations augmentées au moyen d'une carte tridimensionnelle, 3D, dans un dispositif mobile (100), l'appareil comprenant :
un appareil de prise de vues (150),
un dispositif d'affichage (190) agencé de façon à afficher une image courante comprenant un premier objet (434) et au moins un deuxième objet (435, 436) positionné devant le premier objet (434) de façon à obstruer au moins une zone partielle (434-1) du premier objet (434), où l'image courante est acquise en temps réel par l'intermédiaire de l'appareil de prise de vues, et
un dispositif de commande (110) agencé de façon à :
acquérir une image 3D réelle conservée en mémoire antérieurement appariée avec le premier objet (434) et des informations augmentées pour le premier objet à partir de la carte 3D, et
produire une image synthétisée dans laquelle l'image courante acquise (S401) par l'appareil de prise de vues en temps réel et ladite image 3D réelle conservée en mémoire antérieurement et les informations augmentées sont mélangées (S406) et affichées (S407) sur le dispositif d'affichage, de telle manière que, pour la partie obstruée par le deuxième objet dans le premier objet, l'image 3D réelle conservée en mémoire antérieurement [est affichée] et, pour les autres parties du premier objet à l'exception de la partie obstruée, l'image courante photographiée en temps réel par l'appareil de prise de vues est affichée.

2. L'appareil selon la Revendication 1, où le dispositif de commande (110) est en outre agencé de façon à afficher l'image 3D réelle comme étant insérée dans la zone partielle (434-1) dans l'image courante.

3. L'appareil selon la Revendication 2, où le dispositif de commande (110) est en outre agencé de façon à afficher au moins une partie du au moins un deuxième objet (435, 436) de manière transparente ou translucide.

4. L'appareil selon la Revendication 1, où le dispositif de commande (110) est en outre agencé de façon à :
afficher l'image 3D réelle comme étant insérée dans la zone partielle (434-1) dans l'image courante,
afficher au moins une partie du au moins un deuxième objet (435, 436) de manière transparente ou translucide, et
indiquer un itinéraire de conduite du dispositif mobile (100) entre le premier objet (434) et le au moins un deuxième objet (435, 436).

5. L'appareil selon la Revendication 1, où l'image 3D réelle comprend des informations 3D et des informations de profondeur pour des pixels de chaque image.

6. L'appareil selon la Revendication 1, où le dispositif de commande (110) est en outre agencé de façon à :
transmettre des informations d'emplacement et des informations de direction du dispositif mobile (100) à une unité de fourniture de cartes 3D (300), et
transmettre l'image courante à l'unité de fourniture de cartes 3D (300), et
où l'image 3D réelle est appariée en fonction des informations d'emplacement et des informations de direction du dispositif mobile (100) et de l'image courante par l'unité de fourniture de cartes 3D (300).

7. L'appareil selon la Revendication 1, où le dispositif de commande (110) est en outre agencé de façon à afficher des informations conservées en mémoire dans le dispositif mobile sur le premier objet (434).

8. Un procédé de fourniture d'informations augmentées au moyen d'une carte tridimensionnelle, 3D, dans un dispositif mobile (100), le procédé comprenant :
l'acquisition (S401) d'une image courante comprenant un premier objet (434) et au moins un deuxième objet (435, 436) positionné devant le premier objet (434) de façon à obstruer au moins une zone partielle (434-1) du premier objet (434), où l'image courante est acquise en temps réel au moyen d'un appareil de prise de vues (150),
l'acquisition d'une image 3D réelle conservée en mémoire antérieurement appariée avec le premier objet (434) et des informations augmentées pour le premier objet à partir de la carte 3D, et
le mélange (S406) et l'affichage (S407) de l'image courante acquise en temps réel au moyen de l'appareil de prise de vues (150) avec l'image 3D réelle et les informations augmentées sur un dispositif d'affichage (190) de telle manière que, pour la partie obstruée par le deuxième objet dans le premier objet, l'image 3D réelle conservée en mémoire antérieurement [est affichée] et, pour les autres parties du premier objet à l'exception de la partie obstruée, l'image courante photographiée en temps réel par l'appareil de prise de vues est affichée.

9. Le procédé selon la Revendication 8, où l'image 3D réelle est affichée (S407) de sorte qu'elle soit insérée dans la zone partielle (434-1) dans l'image courante.

10. Le procédé selon la Revendication 9, où au moins une partie du au moins un deuxième objet (435, 436) est affichée de manière transparente ou translucide.

11. Le procédé selon la Revendication 8, où l'image 3D réelle est affichée comme étant insérée dans la zone partielle (434-1) dans l'image courante,
où au moins une partie du au moins un deuxième objet (435, 436) est affichée de manière transparente ou translucide, et
où un itinéraire de conduite du dispositif mobile (100) est indiqué entre le premier objet (434) et le au moins un deuxième objet (435, 436).

12. Le procédé selon la Revendication 8, où l'image 3D réelle contient des informations 3D et des informations de profondeur pour des pixels de chaque image.

13. Le procédé selon la Revendication 8, où le dispositif mobile (100) transmet des informations d'emplacement du dispositif mobile (100), des informations de direction du dispositif mobile (100) et l'image courante à une unité de fourniture de cartes 3D (300), et
où l'image 3D réelle est appariée en fonction des informations d'emplacement du dispositif mobile (100), des informations de direction du dispositif mobile (100) et de l'image courante par l'unité de fourniture de cartes 3D (300).

14. Le procédé selon la Revendication 8, où le dispositif mobile (100) affiche des informations conservées en mémoire dans celui-ci sur le premier objet (434).
